# EUROPEAN PATENT SPECIFICATION

(11) **EP 0 749 249 B1**
(45) Date of publication and mention of the grant of the patent: **06.09.2000**
(21) Application number: 96109499.2
(22) Date of filing: 13.06.1996
(51) Int. Cl.: H04N 9/31

(54) **Display systems**
Anzeigesysteme
Systèmes d'affichage

(30) Priority: 13.06.1995 US 742
(43) Date of publication of application: 18.12.1996
(73) Proprietor: TEXAS INSTRUMENTS INCORPORATED, Dallas Texas 75265 (US)
(72) Inventor: Marshall, Stephen W., Richardson, TX 75080 (US)
(74) Representative: Schwepfinger, Karl-Heinz, Dipl.-Ing.

(56) References cited:
- EP-A- 0 511 829
- US-A- 5 046 162
- ELEKTRONIK, vol. 42, no. 20, 5 October 1993, page 30, 32 XP000396420 "BILDPROJEKTION PER MIKROCHIP"

## Description

### FIELD OF THE INVENTION

The present invention generally relates to field sequential color display systems, and more particularity, to a method and apparatus for aligning color modulation data to color wheel filter segments to prevent a spatial light modulator from modulating incident light other than a pure color, such as light colored by the interface or spoke defined between adjacent colored segments.

### BACKGROUND OF THE INVENTION

In many spatial light modulator (SLM) display systems using field sequential color rendition, a color wheel including filters of the three primary colors, namely red, blue and green, passes these colored filters in the beam path between a light source and the SLM. One such system is disclosed in commonly assigned US Patent US-A-5 233 385 to Sampsell, entitled "White Light Enhanced Color Field Sequential Projection" and US Patent US-A-5 192 946 to Thompson, et al. entitled "Digitized Color Video Display System" which implements a digital micromirror device (DMD) to modulate incident light and form a light image. Modulation data for each color is fed to the SLM during the time the corresponding color filter is in the light path. The color wheel is usually placed at a point where the light beam is narrow to minimize the transition time for filter segment boundaries or spokes to pass through the light beam, thus maximizing the light efficiency of the SLM display system. During the spoke time, also referred to as a blank time, that is, the time the light beam is being colored by two filters across the segment boundary (spoke), the SLM must be turned off to prevent modulating a mix of color light from both adjacent filter segments. Therefore, the presentation of modulation data to the SLM must be carefully aligned to the color wheel position to keep within the associated filter segment boundary and to avoid modulating light during the spoke time blanking period. To complete the synchronization of the system, the color wheel rate is usually phase locked to the vertical frame rate signal VSYNC of the incoming video data. The stream of processed field sequential color data to the SLM is then timed from a timing mark on the color wheel.

Further methods and apparatus for color imaging are disclosed in Published European Patent document no. EP-A-0 662 773, Published European Patent document no. EP-A-0 663 770 and US Patent No. US-A-5 467 146 all commonly assigned to the applicants. An image input device having color filters and filter position detector is known from US-A-5,046,162. The device inputs a light image of an object with the use of a filter unit having at least two color filters for receiving the light image and separating the light image into the color light components corresponding to the color filter elements. The light image passed through the filter is applied to a charge coupled device for converting the light image to an electrical signal. The document discloses embodiments of a color filter wheel with protruding magnets which cooperate with one or more hall sensors to provide index signals. It also discloses embodiments of a color filter wheel having red, green and blue filters with partition angles that differ in dependence on the transmittance of each color filter to the incident light, and cooperating with a color sensor provided at the side of the color image input device for detecting the color of the incident light.

There is a need in the art to compensate for mechanical tolerance buildups and electronic circuit delays, including compensating for the delay between when the wheel reference marker is sensed, and when one of the color segments is actually coloring the light beam. This is due to the fact that the angular relationship between where a sensor senses the wheel marker and where the light beam illuminates the wheel may vary slightly. The prior art method of making this adjustment is tedious and labor intensive, involving special test equipment including oscilloscopes and photodiodes, to see the modulation sequence in the modulated light and center it between the filter spokes. This method is especially unsuitable for field alignment and repair depots.

### SUMMARY OF THE INVENTION

The present invention achieves technical advantages by illuminating a color wheel filter boundary during a normal blanking time to generate a predetermined color, and determining that the time delay from the reference marker is correct by detecting the predetermined color. For instance, the color magenta will be generated, which is an equal contribution of blue and red light if illumination time is correctly centered over the red/blue boundary. If the timing of the spoke relative to the reference marker is incorrect, the color observed will be bluer or redder depending on the direction of the error. In this way, it can be precisely determined when in time a spoke is being illuminated after the reference marker is sensed. An automatic servo or manual timing adjustment then aligns the modulation data feed for each color to the time the corresponding color filter is known to be in the light path, and not when any filter spoke is in the light path. This avoids modulating light of mixed colors which are generated should a spoke be illuminated and the corresponding light be modulated, while maximizing the light efficiency of the system by minimizing the allocated blanking times.

The display system comprises the features defined in claim 1.

According to the present invention, a pair of optical sensors are utilized to sense the colored light being directed upon the spatial light modulator. Each optical sensor is tuned to sense a different predetermined color and provide a respective second sensor output. The calibration circuit establishes when the spoke is centered in the light beam as a function of the two sensor outputs. This is done by detecting the magnitude of the two sensor outputs, and by determining that when the magnitude of the two sensor outputs are identical, a spoke is centered in the light path. For instance, if the spoke between a red and blue segment is being illuminated, a magenta color is generated. When the outputs of optical sensors are identical in magnitude, one sensor being tuned to the red spectrum, and the other being tuned to the blue spectrum, the spoke is known to be centered in the light beam.

By establishing the precise time after a wheel marker is sensed that a filter spoke is centered in the light beam, the control circuit can feed color modulation data to the SLM only during a time the corresponding color filter is known to be in the light path, and not when a spoke is being illuminated known as the blanking period. This minimizes the transition time that needs to be allotted for a filter segment boundary (spoke) to pass through the light beam, thus maximizing the light efficiency of the SLM display system.

A method of aligning color modulation data to color wheel filter segments in a display system comprises the steps of claim 4.

### BRIEF DESCRIPTION OF THE DRAWINGS

The present invention will now be further described, by way of example, with reference to the accompanying drawings in which;

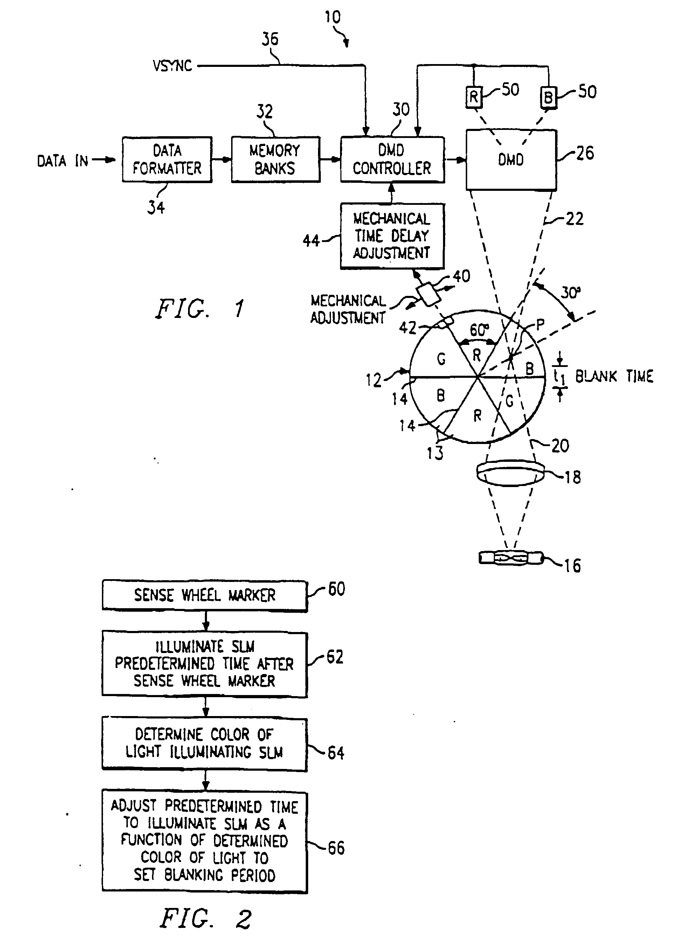

Figure 1 is a block diagram of a field sequential color spatial light modulator display system according to the preferred embodiment of the present invention, whereby a pair of optical sensors are utilized to determine the time at which a spoke passes through the light beam after sensing a wheel marker; and
Figure 2 is a flow diagram of a method according to the preferred embodiment of the present invention for aligning the color modulation data to the color wheel filter segments in the display system, whereby color modulation data for each color segment is fed to the SLM during the time corresponding to the color filter that is in the light path.

### DETAILED DESCRIPTION OF THE PREFERRED EMBODIMENT

Referring now to Figure 1, there is generally shown at 10 a field sequential color spatial light modulator display system according to the preferred embodiment of the present invention.

System 10 is seen to include a color wheel 12 partitioned into a plurality of equally sized colored segments 13, namely, a pair of blue segments, a pair of red segments, and a pair of green colored segments each extending arcuately 60 degrees. Defined at the interface of each adjacent pair of colored segments is a spoke, generally shown at 14. A lamp, such as a metal halide arc lamp, generally shown at 16 has its light output focused by a lens 18 onto a small portion of color wheel 12 being rotated before lens 18. The light beam, generally shown at 20, is narrow at the point of illumination, shown as point P, to minimize the transition time required for the filter segment boundaries or spokes 14 to pass through the light beam, thus maximizing the light efficiency of the display system 10. Light beam 20 is colored by the respective segment 13 in the path of the beam, this colored light being shown at 22 and homogeneously illuminating a spatial light modulator, shown as a digital micromirror device (DMD) generally shown at 26, but limitation to a DMD is not to be inferred. Such a DMD spatial light modulator 26 is discussed in considerable detail in the commonly assigned cross referenced patents discussed in the section entitled Background of the Invention. Essentially, DMD SLM 26 comprises an area array of tiny micromirrors which modulate the incident colored light by deflecting the light into either a projector lens, or to a light absorber. The DMD 26 modulates the incident light to form a light image, the light image being focused upon a display screen, or onto a photoreceptor drum of a xerographic printer, depending on the application.

A microprocessor based DMD controller 30 receives digital color data from one of a plurality of RAM memory banks 32. The digital color data is retrieved by controller 30 for each frame of data to be displayed by DMD 26, depending on which colored segment is currently being illuminated by lamp 16. The stream of video data is provided into memory banks 32 by a data formatter 34, in synchronism with a vertical sync pulse VSYNC on line 36.

According to the preferred embodiment of the present invention, an optical sensor 40 is utilized to sense a wheel marker 42, defined at the perimeter of color wheel 12, as it rotates past the sensor. DMD controller 30 writes digital color data to DMD 26 for display a predetermined time after detecting this wheel marker 42, corresponding to which colored segment is being illuminated by lamp 16, as will now be discussed in more detail.

As shown, a pair of tuned optical sensors 50 are oriented to sense light being reflected from some of the micromirrors (not shown) of DMD 26 when they are in the off position, that is, not reflecting light to the projector lens. One optical sensor may be tuned to sense light having a wavelength corresponding to red, the color of one segment 13, and the other sensor being tuned to detect light having a wavelength corresponding to blue, the color of an adjacent segment 13. Each sensor provides an output indicative of the magnitude of the specific light being sensed. DMD controller 30 calibrates system 10 by setting the precise time period after sensor 40 detects the wheel marker 42 that the outputs by the red and blue optical sensors 50 have identical outputs in magnitude, corresponding in time to when the red/blue spoke 14 is centered in and illuminated by beam 20. If wheel 12 is rotating at about 60 hertz, which is typical of an NTSC display system, and the color wheel is divided into six equal arcuate segments of 60°, the wheel rate period is about 16.67 milliseconds, whereby each colored segment is illuminated from 1/6 that period, namely, 2.77 milliseconds each. The mechanical orientation of just where the light beam 20 is focused on wheel 12, relative to where marker 42 is sensed by sensor 40, will vary slightly from system to system. Therefore, it is imperative that it be known by controller 30 what colored segment is being illuminated, and when a spoke is illuminated, this being done in the present invention by determining when in time after the wheel marker 42 is detected that a color of equal mix from 2 adjacent colored segments is sensed by sensors 50.

As shown by way of illustration in Figure 1, but without any limitation intended, if light from lamp 16 is focused by lens 18 onto the color wheel at an angular position 90° from where sensor 40 is detecting wheel marker 42, with the wheel 12 rotating at 60 hertz, there is a time delay of 16.67 milliseconds divided by 4, which equals 4.17 milliseconds to when the red/green spoke associated with marker 42 will be illuminated by light source 16, generally shown at point P. Of course, the specific orientation of point P in the angular direction relative to sensor 40 may vary from system to system. Using the present invention, controller 30, in combination with sensors 50, determines exactly when in time the red/blue interface 14, or any other interface 14 if desired, is illuminated at point P, after reference marker 42 is detected by sensor 40. Since all spokes are spaced equidistantly from each other 60 degrees, knowing the period of wheel 12, the time all the spokes are illuminated is known.

DMD controller 30 is referenced to a high frequency crystal oscillator (not shown), whereby the precise moment in time that the red and blue sensors 50 provide outputs of equal magnitude, after reference marker 42 is detected by sensor 40, can be ascertained, preferably within 10 microseconds. Thereafter, during normal operation, DMD controller 30 will know precisely where all the spokes 14 are, and thus which colored segment is being illuminated at any given time. By knowing precisely where the spokes 14 in time, in reference to sensing the wheel marker 42, DMD controller 30 timely writes the various digital color data from memory banks 32 to SLM 26 to modulate the correspondingly colored light and create a light image, and without modulating light of mixed colors. The blank time that is associated with when one spoke 14 is being illuminated at point P by lamp 16 is generally shown as the window identified as T₁. In the present invention, this blank time corresponds approximately 200 microseconds. With the present invention, this window is relatively small and centered about the spokes. This 200 microsecond window blank time can be adjusted plus or minus increments of about 10 microseconds such that the window is always centered about the respective spokes.

Referring now to Figure 2, a flow diagram of a method according to the preferred embodiment of the present invention is shown. This method can be performed manually by perceiving the color using the human eye, and making an electrical or mechanical adjustment, but also could be performed with the apparatus of Figure 1, using the sensors 50. In other words, the DMD 10 can be briefly illuminated during a blanking window, say, for a short period of about 15 microseconds corresponding to the least significant bit of an SLM with 8-bits of dynamic range per color running at 60 hertz frame rate. By using the human eye to determine when a magenta color is observed after when sensor 40 senses the optical marker 42, a technician can align and calibrate when digital colored modulation data is being fed to the SLM, such that it corresponds in time to when the corresponding color filter is in the light path.

At step 60, the optical sensor 40 detects the wheel marker 42 and provides an output indicative thereof. At step 62, the SLM 26 is illuminated a predetermined time after sensing this wheel marker. At step 64, using the human eye, the color of light illuminating the SLM 26 is determined. At step 66, a predetermined time in controller 30 which determines the blanking time is adjusted until a magenta color is observed, which again, is the equal combination of red and blue light. This predetermined time can be adjusted manually using dip switches or a potentiometer, for instance, shown as a mechanical time delay adjustment shown at 44. Alternatively, the position of sensor 40 can be arcuately adjusted and fixed using a set screw, as shown by the arrows in Figure 1. The DMD controller 30 uses this set predetermined time in normal operation to insure that color modulation data is fed to the SLM only during the time that a color filter is in the light path, and not when a filter spoke is present. As shown in Figure 1, DMD controller 30 can automatically determine, store and utilize the delay time using a pair of optical sensors 50 as previously discussed.

A technical advantage of the present invention is that each particular display system can be precisely tuned and calibrated such that the DMD controller 30 knows precisely where the illumination point P of the light is focused in angular relation to when the marker 42 is sensed by a sensor 40. That is, if point P is 90° angularly away from where marker 42 is being sensed, as shown in Figure 1, and with the wheel being rotated at precisely 60 hertz frame rate, controller 30 knows precisely when a spoke 14 will lie across point P. During this blanking time, color modulation data is not written to DMD 26 for modulation. This blanking time is minimized, such as set to 200 microsecond, corresponding to wheel rotation of 4.3 degrees, whereby the blanking period can be centered about the spoke in 10 microsecond increments, corresponding to a wheel rotation of 0.2° degrees. This maximizes the efficiency of the display system light. Whether done automatically by the apparatus of Figure 1, or manually by visually ascertaining a predetermined color, such as magenta, the system 10 can be calibrated and aligned either in the factory, in the field or at repair depots.

The present invention allows quick and easy alignment without the need for special test equipment, such as oscilloscopes and photodiodes, and the associated tedious and labor intensive process of matching a modulation sequence in modulated light between filter spokes.

Though the invention has been described with respect to a specific preferred embodiment, many variations and modifications will become apparent to those skilled in the art upon reading the present application. For instance, illuminating a blue/green spoke to observe a cyan color, or illuminating a red/green spoke to observe a yellow color could also be performed.

## Claims

1. A display system, comprising:
a light source (16) for generating light;
a rotatable color wheel (12) for coloring said light and having a plurality of colored segments (13) and a reference marker (42), said segments (13) being interconnected at a plurality of spokes (14);
a reflective spatial light modulator (26) for modulating said colored light;
a first sensor (40) for sensing said wheel reference marker (42) and providing a first sensor output indicative of said sensed marker;
a second sensor (50) sensing the intensity of a first color of said colored light reflected by said spatial light modulator (26) and providing a second sensor output indicative of said sensed first color;
a third sensor (50) sensing the intensity of a second color of said colored light reflected by said spatial light modulator (26) and providing a third sensor output indicative of said sensed second color;
a calibration circuit for determining when a spoke (14) connecting a colored segment (13) of said first color with a colored segment (13) of said second color is illuminated by detecting when said second sensor output is equal to said third sensor output, and generating an output; and
a control circuit for determining the speed of said color wheel (12) by measuring the interval between said first sensor outputs, and controlling said spatial light modulator (26) to modulate said colored light from said color wheel (12) as a function of said color wheel speed and the position of said color wheel (12) as determined by said calibration circuit output so that modulation is not carried out when a spoke is illuminated.

2. The display system as specified in claim 1, wherein said index mark has a predetermined angular separation from the point on said wheel at which light passes through said wheel when said second and third sensors are operated.

3. The display system of claim 1 or claim 2, wherein the display system is a field sequential color display system (10).

4. A method of aligning color modulation data to color wheel filter segments (13) in a display system (10), comprising the steps of:
rotating a color wheel (12) having a reference marker (42) and a plurality of colored segments (13) joined at a plurality of spokes (14);
detecting said reference marker (42);
illuminating a portion of said color wheel (12) to create a beam of colored light;
reflecting said beam of colored light from a spatial light modulator (26);
detecting the intensity of a first color of said reflected colored light;
detecting the intensity of a second color of said reflected colored light; and
modulating said colored light as a function of the time at which the detected intensity of said first and second colors are equal, so that modulation is not carried out when a spoke is illuminated.

5. The method as specified in claim 4, wherein said step of modulating said colored light is performed utilizing a DMD spatial light modulator (26) having an array of pixel mirrors to modulate said colored light.

## Patentansprüche

1. Anzeigesystem, mit:
einer Lichtquelle (16) zum Erzeugen von Licht;
einem drehbaren Farbrad (12) zum Färben des Lichts, wobei das Farbrad (12) mehrere farbige Segmente (13) und eine Referenzmarkierung (42) besitzt, wobei die Segmente (13) an mehreren Speichen (14) miteinander verbunden sind;
einem reflektierenden räumlichen Lichtmodulator (26) zum Modulieren des gefärbten Lichts;
einem ersten Sensor (40) zum Erfassen der Rad-Referenzmarkierung (42) und zum Erzeugen eines ersten Sensorausgangssignals, das die erfaßte Markierung angibt;
einem zweiten Sensor (50), der die Intensität einer ersten Farbe des farbigen Lichts, das vom räumlichen Lichtmodulator (26) reflektiert wird, erfaßt und ein zweites Sensorausgangssignal erzeugt, das die erfaßte erste Farbe angibt;
einem dritten Sensor (50), der die Intensität einer zweiten Farbe des farbigen Lichts, das vom räumlichen Lichtmodulator (26) reflektiert wird, erfaßt und ein drittes Sensorausgangssignal erzeugt, das die erfaßte zweite Farbe angibt;
einer Kalibrierungsschaltung, die feststellt, wenn eine ein farbiges Segment (13) der ersten Farbe mit einem farbigen Segment (13) der zweiten Farbe verbindende Speiche (14) beleuchtet wird, indem sie erfaßt, wenn das zweite Sensorausgangssignal gleich dem dritten Sensorausgangssignal ist, und ein Ausgangssignal erzeugt; und
einer Steuerschaltung, die die Geschwindigkeit des Farbrades (12) durch Messen des Intervalls zwischen den ersten Sensorausgangssignalen bestimmt und den räumlichen Lichtmodulator (26) in der Weise steuert, daß er das gefärbte Licht vom Farbrad (12) als Funktion der Farbradgeschwindigkeit und der Position des Farbrades (12), die durch das Kalibrierungsschaltungs-Ausgangssignal bestimmt wird, moduliert, so daß die Modulation nicht ausgeführt wird, wenn eine Speiche beleuchtet wird.

2. Anzeigesystem nach Anspruch 1, wobei die Indexmarkierung um einen vorgegebenen Winkel von dem Punkt auf dem Rad getrennt ist, an dem das Licht durch das Rad verläuft, wenn die zweiten und dritten Sensoren betrieben werden.

3. Anzeigesystem nach Anspruch 1 oder Anspruch 2, wobei das Anzeigesystem ein Rasterwechsel-Farbanzeigesystem (10) ist.

4. Verfahren zum Ausrichten von Farbmodulationsdaten auf Farbrad-Filtersegmente (13) in einem Anzeigesystem (10), mit den folgenden Schritten:
Drehen eines Farbrades (12), das eine Referenzmarkierung (42) und mehrere farbige Segmenten (13), die an mehreren Speichen (14) miteinander verbunden sind, aufweist;
Erfassen der Referenzmarkierung (42);
Beleuchten eines Teils des Farbrades (12), um einen Strahl farbigen Lichts zu erzeugen;
Reflektieren des Strahls farbigen Lichts von einem räumlichen Lichtmodulator (26);
Erfassen der Intensität einer ersten Farbe des reflektierten farbigen Lichts;
Erfassen der Intensität einer zweiten Farbe des reflektierten farbigen Lichts; und
Modulieren des farbigen Lichts als Funktion des Zeitpunkts, zu dem die erfaßte Intensität der ersten und zweiten Farben gleich sind, so daß die Modulation nicht ausgeführt wird, wenn eine Speiche beleuchtet wird.

5. Verfahren nach Anspruch 4, bei dem der Schritt des Modulierens des farbigen Lichts unter Verwendung eines räumlichen Lichtmodulators (DMD-Modulator) (26) mit einer Matrix aus Pixelspiegeln für die Modulation des farbigen Lichts ausgeführt wird.

## Revendications

1. Système d'affichage comprenant :
une source de lumière (16) pour générer de la lumière;
un disque chromatique rotatif (12) pour colorer ladite lumière et ayant une pluralité de segments colorés (13) et un repère de référence (42), lesdits segments (13) étant interconnectés par une pluralité de rayons (14);
un modulateur de lumière spatial réfléchissant (26) pour moduler ladite lumière colorée;
un premier capteur (40) pour capter ledit repère de référence (42) du disque et délivrer une sortie de premier capteur indicative dudit repère capté;
un deuxième capteur (50) captant l'intensité d'une première couleur de ladite lumière colorée réfléchie par ledit modulateur de lumière spatial (26) et délivrant une sortie de deuxième capteur indicative de ladite première couleur captée;
un troisième capteur (50) captant l'intensité d'une deuxième couleur de ladite lumière colorée réfléchie par ledit modulateur de lumière spatial (26) et délivrant une sortie de troisième capteur indicative de ladite deuxième couleur captée;
un circuit d'étalonnage pour déterminer le moment où un rayon (14) connectant un segment coloré (13) de ladite première couleur à un segment coloré (13) de ladite deuxième couleur est éclairé par détection de l'instant où ladite sortie du deuxième capteur est égale à ladite sortie du troisième capteur, et générer une sortie; et
un circuit de commande pour déterminer la vitesse dudit disque chromatique (12) en mesurant l'intervalle entre lesdites sorties du premier capteur, et pour commander le modulateur de lumière spatial (26) pour moduler ladite lumière colorée à partir dudit disque chromatique (12) en fonction de la vitesse dudit disque chromatique et de la position dudit disque chromatique (12), comme déterminé par ladite sortie du circuit d'étalonnage de telle sorte qu'une modulation ne soit pas effectuée lorsqu'un rayon est éclairé.

2. Système d'affichage selon la revendication 1, dans lequel ledit repère d'index a une séparation angulaire prédéterminée par rapport au point sur ledit disque où de la lumière passe à travers ledit disque lorsque ledit deuxième et ledit troisième capteurs fonctionnent.

3. Système d'affichage selon la revendication 1 ou 2, dans lequel le système d'affichage est un système d'affichage de couleurs à séquence de trames (10).

4. Procédé d'alignement de données de modulation de couleurs sur des segments de filtre à disque chromatique (13) dans un système d'affichage (10), comprenant les étapes consistant :
à faire tourner un disque chromatique (12) ayant un repère de référence (42) et une pluralité de segments colorés (13) joints par une pluralité de rayons (14);
à détecter ledit repère de référence (42);
à éclairer une partie dudit disque chromatique (12) pour créer un faisceau de lumière colorée;
à réfléchir ledit faisceau de lumière colorée sur un modulateur de lumière spatial (26);
à détecter l'intensité d'une première couleur de ladite lumière colorée réfléchie;
à détecter l'intensité d'une deuxième couleur de ladite lumière colorée réfléchie; et
à moduler ladite lumière colorée en fonction du moment où l'intensité détectée de ladite première couleur et celle détectée de ladite deuxième couleur sont égales de telle sorte qu'une modulation ne soit pas effectuée lorsqu'un rayon est éclairé.

5. Procédé selon la revendication 4, dans lequel ladite étape de modulation de ladite lumière colorée est réalisée en utilisant un modulateur de lumière spatial DMD (26) ayant un réseau de miroirs de pixels pour moduler ladite lumière colorée.
